# EUROPEAN PATENT APPLICATION

(11) **EP 1 871 092 A2**
(43) Date of publication of application: **26.12.2007**
(21) Application number: 07107887.7
(22) Date of filing: 10.05.2007
(51) Int. Cl.: H04N 5/00, H04H 1/00

(54) **Method and system for providing esg in a digital video broadcasting system**

(30) Priority: 20.06.2006 KR 20060055525
(71) Applicant: Samsung Electronics Co., Ltd., Suwon-si, Gyeonggi-Do (KR)
(72) Inventor: Jeon, Jin-Woo c/o Samsung Electronics Co., Ltd., Gyeonggi-do (KR); Han, Young-Seop c/o Samsung Electronics Co., Ltd., Gyeonggi-do (KR); Kim, Young-Jip c/o Samsung Electronics Co., Ltd., Gyeonggi-do (KR); Lee, Byoung-Dai c/o Samsung Electronics Co., Ltd., Gyeonggi-do (KR)
(74) Representative: Grünecker, Kinkeldey, Stockmair & Schwanhäusser Anwaltssozietät

(57) **Abstract**

Disclosed is a method and a system for broadcasting an Electronic Service Guide (ESG) for digital broadcasting, which includes predetermined change information, when important information of the ESG is changed in a digital video broadcasting system. A digital broadcasting apparatus broadcasts an ESG that includes current information data and predetermined change information through a broadcasting communication network. A digital broadcasting reception terminal receives and stores the broadcasted ESG, provides a digital broadcast service based on the current information data of the ESG, and provides a digital broadcast service based on the stored predetermined change information data after a prescheduled ESG change time point.

## Description

The present invention relates generally to transmission of an Electronic Service Guide (ESG) in digital broadcasting, and in particular, to a method and a system for providing the latest ESG.

In general, digital broadcasting refers to a broadcasting service providing broadcast signals in a digital scheme, in replacement of a conventional analog scheme, in order to provide the users with high-definition images, high-quality sound, and more varied services. There are various types of digital broadcasting, including, but not limited to, Digital Video Broadcasting-Terrestrial (DVB-T), Digital Audio Broadcasting (DAB), Digital Multimedia Broadcasting (DMB), MediaFLO, and Digital Video Broadcasting-Handheld (DVB-H).

Among the various types of digital broadcasting, as described above, the DVB-H is a technology standard made for providing terrestrial digital broadcast at a high reception rate to a moving terminal, by which it is possible to realize digital mobile multimedia broadcasting which can provide broadcast or contents with high-quality screen and high-quality sound to a user regardless of time and space whether the user is driving or walking.

The DVB-H scheme, as opposed to other digital broadcasting schemes, is designed to broadcast most of the important information required for a broadcasting service together with an ESG by inserting the information into the ESG. Therefore, if a digital broadcasting reception terminal with a DVB-H receiver fails to receive the ESG or fails to receive the latest ESG, it becomes impossible for the digital broadcasting reception terminal to normally receive a digital broadcast service.

Particularly, when important information about a digital broadcast service being currently provided is changed while the digital broadcasting reception terminal is providing the digital broadcast service, there is a problem in that the digital broadcasting reception terminal must interrupt the provision of the digital broadcast service until receiving the latest ESG.

It is the object of the present invention to provide a method for enabling a digital broadcasting reception terminal that is currently providing a digital broadcast service, to continuously provide the digital broadcast service although important information about the digital broadcast service is changed.

This object is solved by the subject matter of the independent claims.

Preferred embodiments are defined in the dependent claims.

In accordance with an aspect of the present invention, there is provided an ESG system for providing an ESG in a digital video broadcasting system, the ESG system including a digital broadcasting apparatus for broadcasting a transport stream during a predetermined time period before a prescheduled ESG change time point "ReconfigurationTime", when a change in ESG data is requested, wherein the transport stream includes ESG setup data, current ESG data, and next ESG data; and a digital broadcasting reception terminal for receiving the transport stream, analyzing the ESG setup data, receiving and storing the current ESG data and the next ESG data according to the analyzed ESG setup data, and providing a digital broadcast service according to the stored next ESG data after the prescheduled ESG change time point detected from the ESG setup data.

In accordance with another aspect of the present invention, there is provided a method for providing an ESG in a digital video broadcasting system. The method includes allowing a digital broadcasting apparatus 101 to broadcast a transport stream during a predetermined time period before a prescheduled ESG change time point "ReconfigurationTime", when a change in ESG data is requested, wherein the transport stream includes ESG setup data, current ESG data, and next ESG data; allowing a digital broadcasting reception terminal to receive the transport stream, to analyze the ESG setup data, and to receive and store the current ESG data and the next ESG data according to the analyzed ESG setup data; and allowing the digital broadcasting reception terminal to provide a digital broadcast service according to the stored next ESG data, after the prescheduled ESG change time point detected from the ESG setup data.

The present invention will be more apparent from the following detailed description taken in conjunction with the accompanying drawings, in which:
FIG. 1 is a block diagram illustrating the construction of a digital video broadcasting system according to the present invention;
FIG. 2 is a conceptual view illustrating a process of receiving an Electronic Service Guide (ESG) by a digital broadcasting reception terminal according to the present invention;
FIG. 3 is a block diagram illustrating the construction of a digital broadcasting reception terminal according to the present invention;
FIG. 4 is a block diagram illustrating the construction of an Electronic Service Guide (ESG) data broadcasted by the digital broadcasting apparatus according to a first embodiment of the present invention;
FIG. 5 is a view illustrating an example of partition declaration data broadcasted by the digital broadcasting apparatus according to the first embodiment of the present invention;
FIG. 6 is a table explaining partition declaration data broadcasted by the digital broadcasting apparatus according to the first embodiment of the present invention;
FIG. 7 is a block diagram illustrating the construction of data broadcasted by a digital broadcasting apparatus according to a second embodiment of the present invention;
FIG. 8 is a view illustrating Delivery Descriptor data broadcasted by the digital broadcasting apparatus according to the second embodiment of the present invention;
FIG. 9 is a table explaining Delivery Descriptor broadcasted by the digital broadcasting apparatus according to the second embodiment of the present invention; and
FIG. 10 is a flowchart illustrating a procedure for resetting Electronic Service Guide (ESG) data by a digital broadcasting reception terminal according to the present invention.

Hereinafter, preferred embodiments of the present invention will be described with reference to the accompanying drawings. In the following description of the present invention, a detailed description of known functions and configurations incorporated herein will be omitted when it may obscure the subject matter of the present invention.

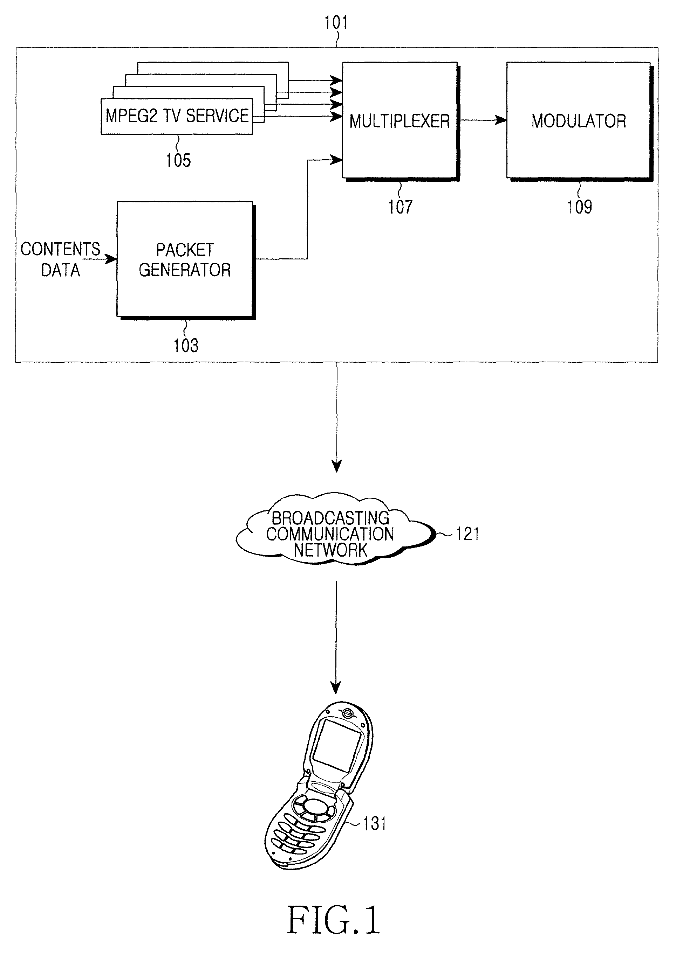

FIG. 1 is a block diagram illustrating the construction of a digital video broadcasting system according to an embodiment of the present invention. The procedure for providing Electronic Service Guide (ESG) data from a digital broadcasting apparatus to a digital broadcasting reception terminal will be described herein with reference to FIG. 1.

A digital video broadcasting system as shown in FIG. 1 includes a digital broadcasting apparatus 101, a broadcasting communication network 121, and a digital broadcasting reception terminal 131. The digital broadcasting apparatus 101 generates and broadcasts a Transport Stream (TS), and the broadcasting communication network 121 broadcasts the transport stream broadcasted by the digital broadcasting apparatus 101 to the digital broadcasting reception terminal 131. The digital broadcasting reception terminal 131 receives a transport stream broadcasted from the digital broadcasting apparatus 101, and provides a digital broadcast service by using the transport stream.

The digital broadcasting apparatus 101 transmits broadcasting data for providing a digital broadcast service to the digital broadcasting reception terminal 131. To this end, the digital broadcasting apparatus 101 may include a packet generator 103, an MPEG2 TV service 105, a multiplexer 107, and a modulator 109.

In detail, the packet generator 103 receives content data from a server to which an IP address is allocated, and packetizes the content data based on the IP address of the server, which has provided the content data. The multiplexer 107 generates a transport stream by using a stream of MPEG2 TV services 105 and signals of data packets input from the packet generator 103. The modulator 109 converts the transport stream input from the multiplexer 107 into an analog signal, amplifies the analog signal in a frequency allocated to a digital broadcast service, and transmits the amplified signal to the broadcasting communication network 121.

The digital broadcast service represents a digital service supported in the digital video broadcasting system, and can provide the user with various services, such as digital TV broadcasts, radio broadcasts, and contents (such as moving pictures, still pictures, games, etc.) provided by content providers.

The transport stream includes ESG-related data and content data for providing a digital broadcast service, which are separated according to sessions. Since the sessions have different IP addresses, the digital broadcasting reception terminal 131 must detect the port and IP address of a desired digital broadcast service for access to a session for the desired service.

The ESG-related data, which represent data for receiving ESG data, includes ESG setup data, current ESG data, and next ESG data.

Particularly, the ESG includes digital broadcast service guide information, and digital broadcast service reception information. The digital broadcast service guide information represents information for providing guidance about current digital broadcast services. Therefore, through the digital broadcast service guide information, it is possible to select a TV channel, a radio channel, or an item capable of downloading data.

Also, the digital broadcast service reception information provides access information, by which the digital broadcasting reception terminal 131 can access a specific session in a transport stream, which has been transmitted from the digital broadcasting apparatus 101.

The broadcasting communication network 121 transmits a transport stream, broadcasted from the digital broadcasting apparatus 101, to the digital broadcasting reception terminal 131. Particularly, the broadcasting communication network 121 transmits ESG-related data, broadcasted from the digital broadcasting apparatus 101, to the digital broadcasting reception terminal 131.

The digital broadcasting reception terminal 131 receives a transport stream transmitted from the digital broadcasting apparatus 101, analyzes the transport stream, and provides a digital broadcast service requested by the user.

Particularly, according to the present invention, when the digital broadcasting reception terminal 131 has received a digital broadcast service request from the user, the digital broadcasting reception terminal 131 receives and stores current ESG data and next ESG data, currently being broadcasted by the digital broadcasting apparatus 101, through the broadcasting communication network 121. Then, the digital broadcasting reception terminal 131 provides a digital broadcast service, based on the digital broadcast guide information and digital broadcast reception information, which are included in the current ESG data. When the present time reaches a prescheduled ESG change time (i.e., an ESG reconfiguration time) "T1" while the digital broadcasting reception terminal 131 is providing a digital broadcast service, the digital broadcasting reception terminal 131 provides the digital broadcast service based on the digital broadcast guide information and digital broadcast reception information of the next ESG data, which have been stored therein.

Although the digital broadcasting reception terminal 131 is not providing a digital broadcast service, the digital broadcasting reception terminal 131 can provide a digital broadcast service according to the digital broadcast guide information and digital broadcast reception information of the next ESG data, which have been stored therein, when the present time has reached a prescheduled ESG change time "T1".

Among the above-mentioned current ESG data and next ESG data, the current ESG data includes digital broadcast guide information and digital broadcast reception information, which enables a current digital broadcast service to be provided. The digital broadcasting reception terminal 131 provides a digital broadcast service based on the current ESG data until the present time reaches a prescheduled ESG change time "T1".

The next ESG data includes the digital broadcast guide information and digital broadcast reception information, which enables a digital broadcast service to be provided after the prescheduled ESG change time "T1". The digital broadcasting reception terminal 131 provides a digital broadcast service based on the next ESG data after the prescheduled ESG change time "T1". That is, the next ESG data becomes the new current ESG data after the prescheduled ESG change time "T1".

The next ESG data correspond to ESG data, which includes a partial change from the current ESG data due to a change in environment setup for digital broadcast services. The situations in which the environment setup for digital broadcast services is changed include, for example, a case in which a channel, an IP address, and/or a port for a digital broadcast service is changed due to spring or autumn digital broadcast reorganization. Also, when a content data provider suddenly changes a service, a corresponding electronic service may be changed. Also, the environment setup can be changed for various other reasons, in addition to the above-mentioned reasons.

The digital video broadcasting system shown in FIG. 1 may be a digital video broadcasting system based on a Digital Video Broadcasting-Handheld (DVB-H) scheme.

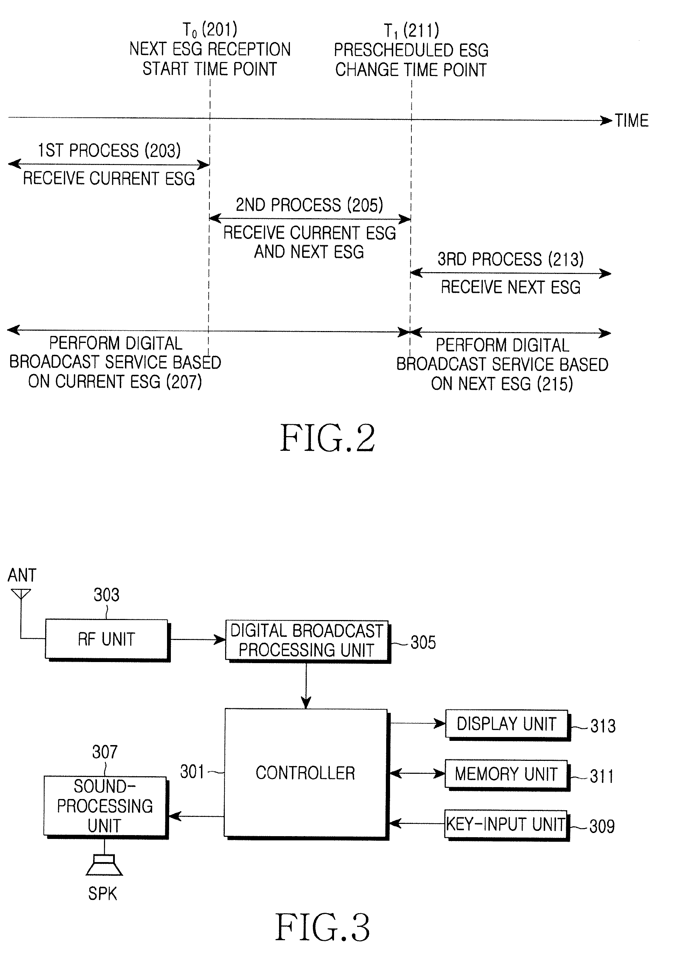

FIG. 2 illustrates a process of receiving ESG data by a digital broadcasting reception terminal according to the present invention. According to the present invention, a procedure of broadcasting ESG data by the digital broadcasting apparatus 101 and a procedure of receiving the ESG data by the digital broadcasting reception terminal 131 will be described herein with reference to FIGs. 1 and 2.

The digital broadcasting apparatus 101 transmits different ESG data based on the next ESG reception start time "T0" 201 and a prescheduled ESG change time "T1" 211. Accordingly, ESG data received by the digital broadcasting reception terminal 131 are changed based on the next ESG reception start time "T0" 201 and a prescheduled ESG change time "T1" 211, and thus the operation of the digital broadcasting reception terminal 131 is also changed.

In detail, in step 203, the digital broadcasting apparatus 101 broadcasts current ESG data during a first process until the present time reaches the next ESG reception start time "T0" 201. During a second process in step 205 between the next ESG reception start time "T0" 201 and the prescheduled ESG change time "T1" 211; the digital broadcasting apparatus 101 broadcasts current ESG data together with next ESG data. Next, the digital broadcasting apparatus 101 broadcasts only the next ESG data during a third process in step 213 after the prescheduled ESG change time "T1" 211.

Accordingly, in step 203 during the first process , the digital broadcasting reception terminal 131 receives current ESG data and provides a digital broadcast service based on the received current ESG data.

Then, during the second process in step 205 between the next ESG reception start time "T0" 201 and the prescheduled ESG change time "T1" 211, the digital broadcasting apparatus 101 broadcasts current ESG data together with next ESG data.

Accordingly, during the second process, the digital broadcasting reception terminal 131 receives and stores both current ESG data and next ESG data, and provides a digital broadcast service based on the current ESG data. Thereafter, after the present time has reached the prescheduled ESG change time "T1" 211, the digital broadcasting reception terminal 131 provides a digital broadcast service based on the stored next ESG data.

Then, during the third process, the digital broadcasting reception terminal 131 receives the next ESG data and provides a digital broadcast service. That is, after the prescheduled ESG change time "T1", the next ESG data becomes the new current ESG data.

Particularly, the description of the present invention will focus on the second process, in which the digital broadcasting apparatus 101 broadcasts current ESG data together with next ESG data, and the digital broadcasting reception terminal 131 receives both current ESG data and next ESG data and provides a digital broadcast service.

FIG. 3 is a block diagram illustrating the construction of a digital broadcasting reception terminal according to the present invention. The operation of the digital broadcasting reception terminal will be described herein with reference to FIGs. 1 to 3.

A Radio Frequency (RF) unit 303 receives RF signals of an ESG data stream and the RF signals of a data stream corresponding to a digital service selected by the user, which are included in a digital broadcast transport stream broadcasted from the digital broadcasting apparatus 101. The RF unit 303 includes an RF receiver, which low-noise amplifies a received RF signal and down-converts the frequency of the received signal.

A digital broadcast processing unit 305 receives an RF signal input from the RF unit 303, demodulates the received RF signal to baseband digital data, and applies the digital data to a controller 301. Particularly, according to the present invention, when the digital video broadcasting system is constructed in the DVB-H broadcasting scheme, the digital broadcast processing unit 305 may be a DVB-H demodulator, which demodulates an RF signal input from the RF unit 303 in an Orthogonal Frequency Division Multiplexing (OFDM) scheme so as to extract digital broadcast data.

A sound-processing unit 307 converts a voice signal output from the controller 301 into an audible sound and outputs the audible sound. A key-input unit 309 provides numeric keys (including the symbol keys "*" and "#") for viewing digital broadcasts and function keys for various functions, so as to generate key signals corresponding to each key pressed by the user and output the generated key signals to the controller 301.

A memory unit 311 stores data required for the control operation of the digital broadcasting reception terminal. Particularly, according to the present invention, the memory unit 311 stores current ESG data and next ESG data, broadcasted from the digital broadcasting apparatus 101.

A display unit 313 displays the current state and an operational state of the digital broadcasting reception terminal according to the control of the controller 301, and generally, may be constructed with a Liquid Crystal Display (LCD) and/or Organic Light Emitting Diodes (OLED).

The controller 301 controls each component of the digital broadcasting reception terminal 131 so as to provide a digital broadcast service.

Particularly, according to the present invention, when a digital broadcast is requested by the user, the controller 301 makes the RF unit 303 receive RF signals of current ESG data and next ESG data, which are included in a transport stream. Then, the controller 301 makes the digital broadcast processing unit 305 convert the RF signals of the ESGs into digital data and to store the converted digital data in the memory unit 311. Also, the controller 301 informs the user of a digital broadcast service provided by the digital broadcasting apparatus 101 based on the current ESG.

Thereafter, when the user selects a digital broadcast , the controller 301 detects the corresponding reception information from the current ESG. Then, the controller 301 controls the RF unit 303 based on the detected reception information, so as to access a data stream of the digital broadcast service, to receive an RF signal of the digital broadcast service, to convert the received RF signal into digital data, and to output the converted digital data.

Also, when the present time reaches a prescheduled ESG change time "T1" 211 while the digital broadcast service is being provided, the controller 301 detects reception information about the digital broadcast service, which is currently provided, from the next ESG, and operates the RF unit 303 according to the detected reception information.

Also, although a digital broadcast service is not being provided, it is possible for the controller 301 to provide a digital broadcast service based on not the current ESG data but the next ESG data after the prescheduled ESG change time "T1" 211 has passed.

The digital broadcasting apparatus 101 broadcasting ESG data may be constructed using a Digital Video Broadcasting-Convergence of Broadcasting and Mobile Service (DVB-CBMS) scheme as set forth by the European Telecommunications Standards Institute (ETSI) or using an Open Air Interface (OAI) scheme as set forth by NOKIA.

First, the method for broadcasting ESG data by a digital broadcasting apparatus 101, which has been constructed using the DVB-CBMS scheme, will be described herein.

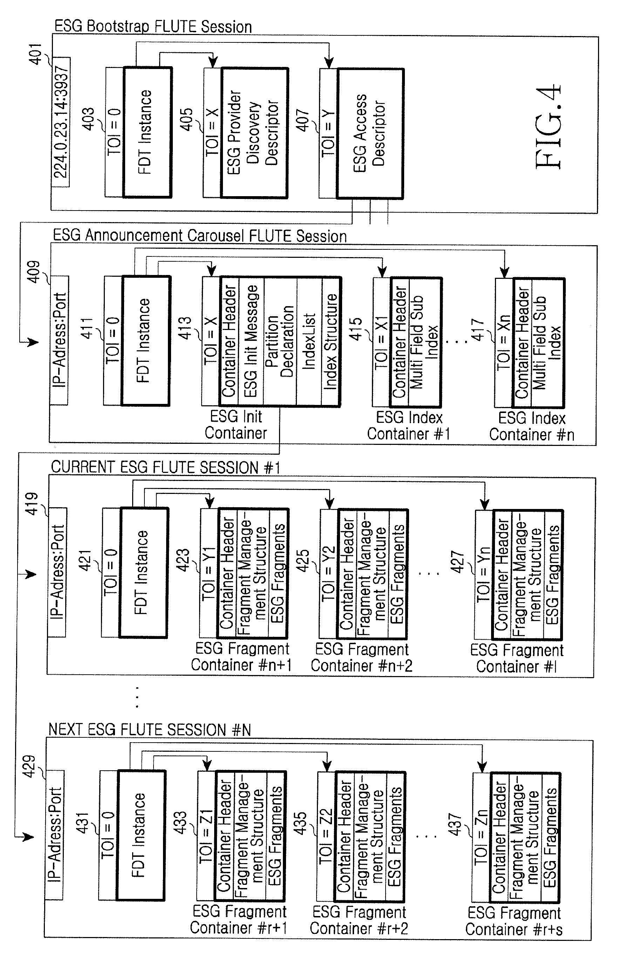

FIG. 4 is a block diagram illustrating the construction of ESG setup data, current ESG data, and next ESG data, broadcasted by the digital broadcasting apparatus according to a first embodiment of the present invention. The method for broadcasting ESG data by the digital broadcasting apparatus 101, which has been constructed using the DVB-CBMS scheme by the ETSI, will be described herein with reference to FIGs. 1 to 4.

An ESG setup data session represents a session to transmit ESG setup data, so the digital broadcasting reception terminal 131 accesses the ESG setup data session and receives ESG setup data. The current ESG data session and the next ESG data session represent sessions to transmit current ESG data and next ESG data, respectively, so the digital broadcasting reception terminal 131 receives current ESG data and next ESG data by accessing each corresponding session.

During the second process in FIG. 2, the digital broadcasting apparatus 101 broadcasts current ESG data and next ESG data, and the digital broadcasting reception terminal 131 receives the current ESG data and next ESG data according to ESG reception setup. The ESG reception setup can be established either to periodically receive ESG data or to receive ESG data when a digital broadcast service is requested by the user.

When transmitting ESG data, the digital broadcasting apparatus 101 transmits ESG Bootstrap FLUTE(File deLivery over Unidirectional Transport) data 401, ESG Announcement Carousel FLUTE data 409, current ESG FLUTE data 419, and next ESG FLUTE data 429, together with the ESG data.

The ESG Bootstrap FLUTE data 401 include a File Delivery Table (FDT) 403, ESG Provider Discovery Descriptor data 405, and ESG Access Descriptor data 407. The FDT 403 provides information about data included in the ESG Bootstrap FLUTE data 401. The ESG Provider Discovery Descriptor data 405 includes information about an ESG data provider, and the ESG Access Descriptor data 407 includes information required for the digital broadcasting reception terminal 131 to receive current ESG data and next ESG data.

The ESG Announcement Carousel FLUTE data 409 includes an FDT 411, ESG Init Container data 413, and ESG Index Container data 415 and 417. The FDT 411 provides information about data included in the ESG Announcement Carousel FLUTE data 409. The ESG Init Container data 413 contain data required for the digital broadcasting reception terminal 131 to initialize ESG data. Particularly, among data included in the ESG Init Container data 413, partition declaration data identify current ESG data and next ESG data, both of which are currently being transmitted, and provide IP address and port information that are access information for access to a current ESG data session and a next ESG data session.

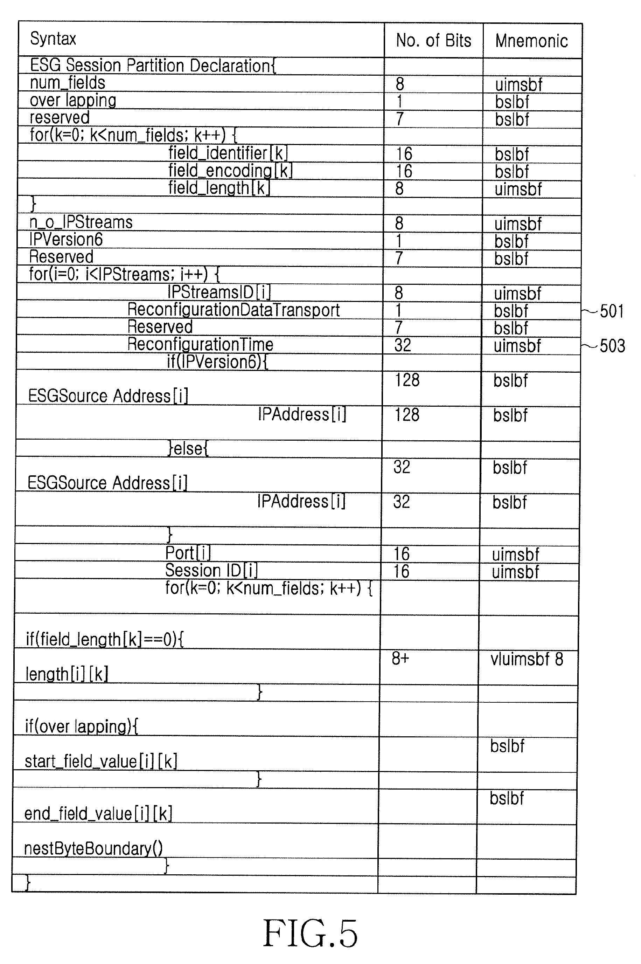

FIG. 5 illustrates an example of the partition declaration data among the ESG Init Container data broadcasted by the digital broadcasting apparatus according to the first embodiment of the present invention. A field for the partition declaration data will be described with reference to FIGs. 1 to 5.

Referring to FIG. 5, the field for the partition declaration data includes ESG transport data "ReconfigurationDataTransport" 501 which represents whether corresponding ESG setup data are related to current ESG data or to next ESG data, and a prescheduled ESG change time (i.e., an ESG reconfiguration time) "T1" 503.

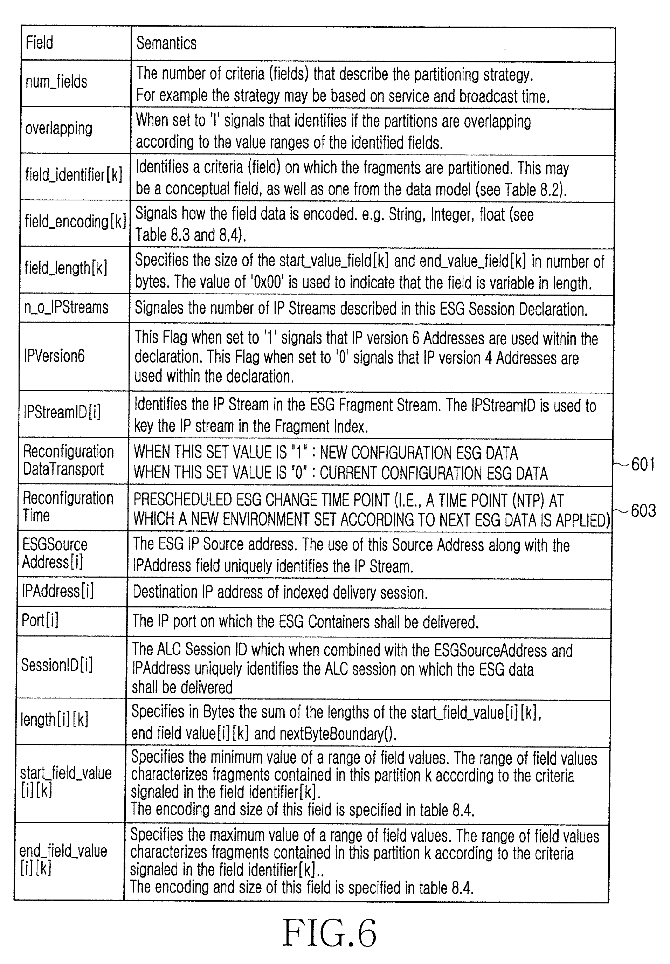

FIG. 6 is a table explaining partition declaration data broadcasted by the digital broadcasting apparatus according to the first embodiment of the present invention. ESG transport data "ReconfigurationDataTransport" may be set to "0" or "1" according to whether next ESG data has been transmitted.

When the ESG transport data "ReconfigurationDataTransport" has a value of "0", IP address and port information about current ESG data are provided. When the ESG transport data "ReconfigurationDataTransport" has a value of "1", IP address and port information about next ESG data are provided.

The prescheduled ESG change time "ReconfigurationTime" 503 represents a time point at which the digital broadcasting apparatus 101 starts to broadcast a digital broadcast service based on the next ESG data. The digital broadcasting apparatus 101 broadcasts a digital broadcast service based on current ESG information until the present time reaches the prescheduled ESG change time "ReconfigurationTime" 503, and broadcasts the digital broadcast service based on the next ESG information after the prescheduled ESG change time "ReconfigurationTime" 503.

Referring again to FIG. 4, the current ESG FLUTE data 419 includes an FDT 421, and ESG Fragment Container data 423, 425, and 427. The FDT 421 provides information about data included in the current ESG FLUTE data 419. The ESG Fragment Container data 423, 425, and 427 are pieces of current ESG data. Therefore, the digital broadcasting reception terminal 131 receives the ESG Fragment Container data 423, 425, and 427, and generates current ESG information by using the received data.

The next ESG FLUTE data 429 include an FDT 431, and ESG Fragment Container data 433, 435, and 437. The FDT 431 provides information about data included in the next ESG FLUTE data 429. The ESG Fragment Container data 433, 435, and 437 are pieces of next ESG data. Therefore, the digital broadcasting reception terminal 131 generates next ESG information by using the Fragment Container data 433, 435, and 437.

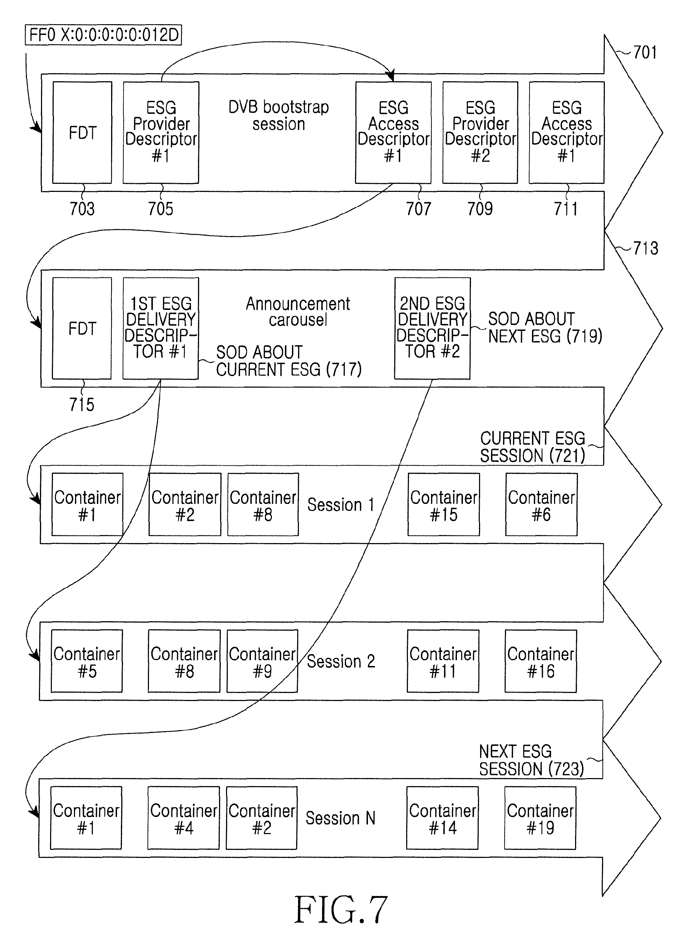

FIG. 7 is a block diagram illustrating the construction of ESG setup data, current ESG data, and next ESG data, which are broadcasted by a digital broadcasting apparatus according to a second embodiment of the present invention. The construction of ESG data broadcasted by a digital broadcasting apparatus, which has been constructed according to the DVB-H scheme of the Open-Air Interface (OAI) standard, will now be described with reference to FIGs. 1 to 7.

First, the digital broadcasting apparatus 101 broadcasts current ESG data and next ESG data during the second process of FIG. 2.

When transmitting ESG data, the digital broadcasting apparatus 101 broadcasts DVB Bootstrap data 701, Announcement Carousel data 713, current ESG data 721, and next ESG data 725, together with the ESG data.

The DVB Bootstrap data 701 includes a File Delivery Table (FDT) 703, ESG Provider Descriptor data 705 and 709, and ESG Access Descriptor data 707 and 711. The FDT 703 provides information about data included in the DVB Bootstrap data 701. The ESG Provider Descriptor data 705 and 709 include information about an ESG data provider, and the ESG Access Descriptor data 707 and 711 include information required for the digital broadcasting reception terminal 131 to receive current ESG data and next ESG data.

The Announcement Carousel data 713 includes an FDT 715, and ESG Delivery Descriptor data 717 and 719. The FDT 715 provides information about data included in the Announcement Carousel data 713. The ESG Delivery Descriptor data 717 and 719 provide information to enable the digital broadcasting reception terminal 131 to access a current ESG data session and a next ESG data session. Particularly, the first ESG Delivery Descriptor data 717 provides IP address and port information to enable access to the current ESG data session, and the second ESG Delivery Descriptor data 717 provide IP address and port information to enable access to the next ESG data session.

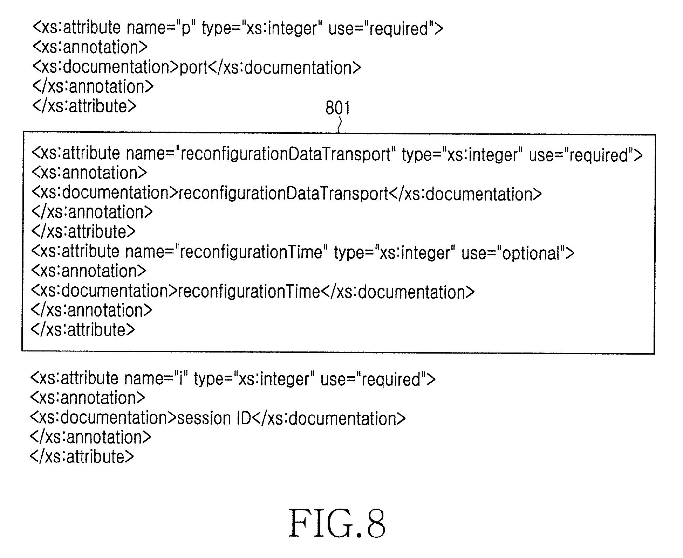

FIG. 8 illustrates an XML of the ESG Delivery Descriptor data 717 and 719, which are broadcasted by the digital broadcasting apparatus according to the second embodiment of the present invention. The XML of the ESG Delivery Descriptor data will be described with reference to FIGs. 1 to 8.

The XML shown in FIG. 8 provides a reset instruction 801, which includes "ESG ReconfigurationDataTransport" and "ReconfigurationTime".

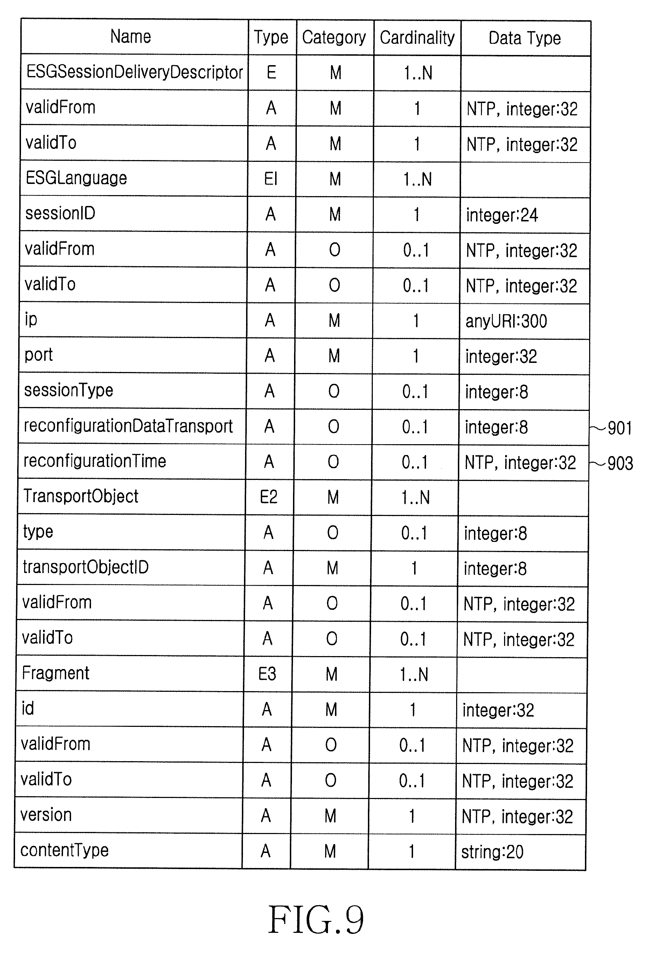

FIG. 9 is a table explaining the XML of an ESG Delivery Descriptor, which is broadcasted by the digital broadcasting apparatus according to the second embodiment of the present invention. The reset instruction 801 will now be described with reference to FIG. 9.

The ESG transport data "ReconfigurationDataTransport" 901 included in the reset instruction 801 may be set to "0" or "1" according to whether next ESG data has been transmitted. When the ESG transport data "ReconfigurationDataTransport" 901 have a value of "0", the ESG delivery descriptor data provides IP address and port information about a current ESG session. When the ESG transport data "ReconfigurationDataTransport" 901 has a value of "1", the ESG delivery descriptor data provides IP address and port information about a next ESG session.

The prescheduled ESG change time "ReconfigurationTime" 903 represents a time point at which the digital broadcasting apparatus 101 starts to broadcast a digital broadcast service according to next ESG information. Therefore, the digital broadcasting apparatus 101 broadcasts a digital broadcast service based on current ESG information until the present time reaches the prescheduled ESG change time "ReconfigurationTime" 903, and then broadcasts a digital broadcast service according to next ESG information after the prescheduled ESG change time "ReconfigurationTime" 903.

Referring again to FIG. 7, the current ESG data 721 include ESG Container data, which are pieces of current ESG data. Therefore, the digital broadcasting reception terminal 131 receives the ESG Container data included in the current ESG data 721 and generates current ESG information by using the received data.

The next ESG data 723 includes ESG Container data, which are pieces of next ESG data. Therefore, the digital broadcasting reception terminal 131 receives the ESG Container data included in the next ESG data and generates next ESG information using the received data.

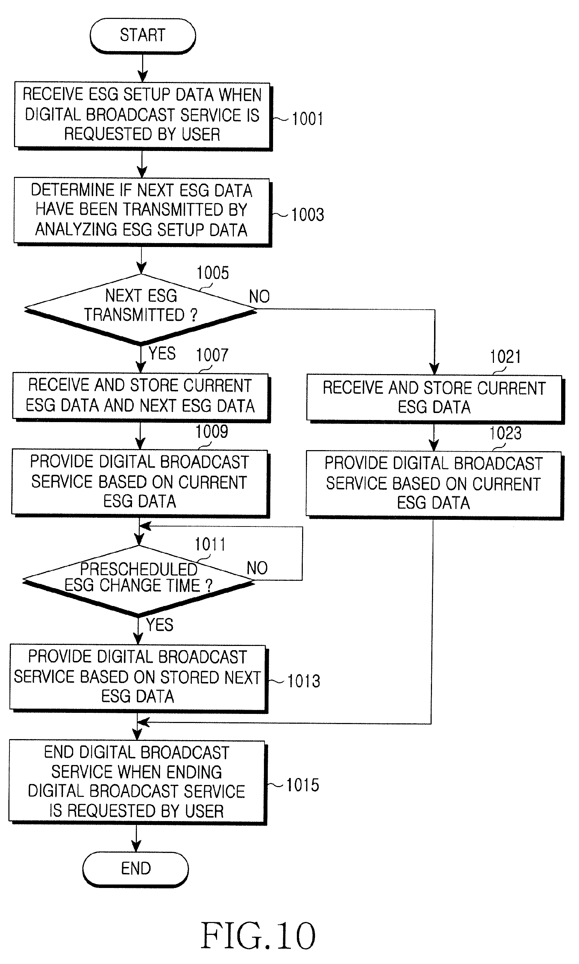

FIG. 10 is a flowchart illustrating a procedure for resetting ESG data by a digital broadcasting reception terminal according to the present invention. The procedure for receiving current ESG data and next ESG data and resetting ESG information according to the received data by a digital broadcasting reception terminal will be described below with reference to FIGs. 1 to 10.

The following description is based on an assumption that the ESG reception setup of the digital broadcasting reception terminal 131 has been configured to receive ESG data when a digital broadcast service is requested by the user.

When the user requests a digital broadcast service , the controller 301 of the digital broadcasting reception terminal 131 receives ESG setup data in step 1001.

The controller 301 receives a transport stream, and searches the transport stream, which has been received through a predetermined IP address and a predetermined port, for a session for transmission of ESG setup data. Then, the controller 301 receives the ESG setup data by accessing the ESG setup data session.

In step 1003, the controller 301 determines if a digital broadcasting apparatus 101 is broadcasting next ESG data, by analyzing a set value of next ESG transport data "ReconfigurationData Transport" which is included in the ESG setup data.

In step 1005, if the set value of the next ESG transport data "ReconfigurationData Transport" included in the ESG setup data, which has been analyzed in step 1003, is "1", the controller 301 proceeds to step 1007. If the set value of the next ESG transport data "ReconfigurationData Transport" included therein is "0", the controller 301 proceeds to step 1021.

In step 1021, the controller 301 searches the transport stream for current ESG data, and receives and stores the current ESG data in the memory unit 311.

The controller 301 accesses a current ESG data session using IP address and port information for the current ESG data session, which has been included in the ESG setup data. Then, the controller 301 receives current ESG data from the current ESG data session, which the controller 301 has accessed, and stores the received current ESG data in the memory unit 311.

In step 1023, the controller 301 provides a digital broadcast service based on the current ESG data.

The controller 301 informs the user of a list of digital broadcast services, which can be provided according to the current ESG data. When a digital broadcast service is selected by the user, the controller 301 searches IP addresses and port information, which is included in the current ESG data, for IP address and port information corresponding to the selected digital broadcast service. Then, the controller 301 accesses a session for the selected digital broadcast service using the IP address and port information found, receives the digital broadcast service selected by the user, and provides the digital broadcast service to the user. Thereafter, the controller 301 performs step 1015.

Meanwhile, in step 1007, the controller 301 searches the transport stream for current ESG data and next ESG data, and receives and stores the current ESG data and next ESG data in the memory unit 311.

The controller 301 searches for IP address and port information about a current ESG data session and for IP address and port information about a next ESG data session, which are included in the ESG setup data. Then, the controller 301 accesses the current ESG data session and the next ESG data session using the IP address and port information found. Next, the controller 301 receives current ESG data and next ESG data from the current ESG data session and next ESG data session, which the controller 301 has accessed, and stores the received current ESG data and next ESG data in the memory unit 311.

The ESG setup data used from step 1001 to step 1007 may be changed depending on whether the DVB-CBMS standard of ETSI or the OAI standard of NOKIA is used.

First, the procedure from step 1001 to step 1007 according to the present invention will be described with respect to a case using the DVB-CBMS standard. The controller 301 receives a transport stream, and receives ESG Bootstrap FLUTE data included in the transport stream using IP address and port information, which have been pre-stored in the memory unit 311. Then, the controller 301 receives and analyzes an FDT included in the ESG Bootstrap FLUTE data. Next, the controller 301 receives ESG Provider Discovery Descriptor data and ESG Access Descriptor data, which are included in the ESG Bootstrap FLUTE data, using the analyzed FDT. Also, the controller 301 obtains IP address and port information about an ESG Announcement Carousel FLUTE data session by analyzing the received ESG Access Descriptor data.

Then, the controller 301 accesses the ESG Announcement Carousel FLUTE data session using the obtained IP address and port information, and receives data included in the ESG Announcement Carousel FLUTE data session. Next, the controller 301 analyzes partition declaration data included in ESG Init Container data, from among the received data. With the DVB-CBMS standard, the ESG Init Container data corresponds to the ESG setup data employed in the present invention.

Then, when ESG transport data "ReconfigurationDataTransport" of the partition declaration data has a value of "0", the controller 301 detects IP address and port information to access a current ESG FLUTE data session. In contrast, when the ESG transport data "ReconfigurationDataTransport" has a value of "1", the controller 301 detects IP address and port information for access to a next ESG FLUTE data session.

Next, the controller 301 accesses the current ESG FLUTE data session and next ESG FLUTE data session by using the detected IP address and port information. Then, the controller 301 receives current ESG data and next ESG data from each session, which the controller 301 has accessed, and stores the received data in the memory unit 311.

Next, a procedure from step 1001 to step 1007 according to the present invention will be described with respect to a case using the OAI standard. The controller 301 receives a transport stream and receives DVB Bootstrap data included in the transport stream, which has been received based on IP address and port information stored in the memory unit 311. Then, the controller 301 analyzes an FDT included in the DVB Bootstrap data, and receives ESG Provider Descriptor data and ESG Access Descriptor data, which are included in the DVB Bootstrap data. Also, the controller 301 obtains IP address and port information about an Announcement Carousel data session by analyzing the received ESG Access Descriptor data.

Then, the controller 301 accesses the Announcement Carousel data session using the obtained IP address and port information, and receives data included in the Announcement Carousel data session. Next, the controller 301 analyzes each piece of received ESG Delivery Descriptor data. With the OAI standard, the ESG Delivery Descriptor data corresponds to the ESG setup data employed in the present invention. Then, when ESG transport data "ReconfigurationDataTransport" of the analyzed ESG Delivery Descriptor data has a value of "0", the controller 301 detects IP address and port information for access to a current ESG data session. In contrast, when ESG transport data "ReconfigurationDataTransport" of the analyzed ESG Delivery Descriptor data has a value of "1", the controller 301 detects IP address and port information for access to a next ESG data session.

Next, the controller 301 accesses the current ESG data session and next ESG data session using the detected IP address and port information. Then, the controller 301 receives current ESG data and next ESG data from the sessions, which the controller 301 has accessed, and stores the received data in the memory unit 311.

Meanwhile, in step 1009, the controller 301 provides a digital broadcast service based on the current ESG data stored in step 1007.

The controller 301 informs the user of a list of digital broadcast services, which can be provided based on the current ESG data. When a digital broadcast service is selected by the user, the controller 301 searches IP addresses and port information, which is included in the current ESG data, for IP address and port information corresponding to the selected digital broadcast service. Then, the controller 301 accesses a session for the digital broadcast service corresponding to the IP address and port information found, receives the digital broadcast service selected by the user, and provides the digital broadcast service to the user.

In step 1011, the controller 301 determines if the present time has reached a prescheduled ESG change time "ReconfigurationTime".

If the present time is equal to the prescheduled ESG change time "ReconfigurationTime", the controller 301 proceeds to step 1013; if not, the controller 301 repeats step 1011.

In step 1013, the controller 301 provides a digital broadcast service based on the next ESG data, which have been stored in the memory unit 311 either in step 1007 or during the digital broadcast service based on the current ESG data.

When the user has requested the control unit 301 to end the digital broadcast service, the controller 301 ends the digital broadcast service in step 1015.

While the present invention has been shown and described with reference to certain preferred embodiments thereof, it will be understood by those skilled in the art that various changes in form and details may be made therein without departing from the scope of the invention as defined by the appended claims. For example, although the embodiments of the present invention have been made for a digital broadcasting reception terminal that has been set to receive ESG data when a digital broadcast service is requested by the user, the digital broadcasting reception terminal according to the present invention may be set to periodically receive ESG data. Accordingly, the scope of the invention is not to be limited by the above embodiments but by the claims and the equivalents thereof.

## Claims

1. An electronic service guide system for providing an electronic service guide in a digital video broadcasting system, the electronic service guide system comprising:
a digital broadcasting apparatus for broadcasting a transport stream during a predetermined time period before a prescheduled electronic service guide change time point, when a change in electronic service guide data is requested, wherein the transport stream includes electronic service guide setup data, current electronic service guide data, and next electronic service guide data; and
a digital broadcasting reception terminal for receiving the transport stream, analyzing the electronic service guide setup data, receiving and storing the current electronic service guide data and the next electronic service guide data according to the analyzed electronic service guide setup data, and providing a digital broadcast service according to the stored next electronic service guide data after the prescheduled electronic service guide change time point detected from the electronic service guide setup data.

2. The electronic service guide system as claimed in claim 1, wherein the digital broadcasting apparatus broadcasts a transport stream including electronic service guide setup data and current electronic service guide data during another time period, other than the predetermined time period.

3. The electronic service guide system as claimed in claim 1 or 2, wherein the electronic service guide setup data includes current electronic service guide data access information and next electronic service guide data access information when the electronic service guide setup data corresponds to next electronic service guide setup data, and the electronic service guide setup data includes current electronic service guide data access information when the electronic service guide setup data corresponds to current electronic service guide setup data.

4. The electronic service guide system as claimed in claim 1 or 2, wherein the electronic service guide setup data includes next electronic service guide data access information when the electronic service guide setup data corresponds to next electronic service guide setup data, and the electronic service guide setup data includes current electronic service guide data access information when the electronic service guide setup data corresponds to current electronic service guide setup data.

5. The electronic service guide system as claimed in claim 3 or 4, wherein the next electronic service guide setup data further includes the prescheduled electronic service guide change time point.

6. The electronic service guide system as claimed in claim 3 or 4, wherein the digital broadcasting apparatus is constructed based on a Digital Video Broadcasting-Convergence of Broadcasting and Mobile Service, DVB-CBMS, scheme.

7. The electronic service guide system as claimed in claim 3 or 4, wherein the digital broadcasting apparatus is constructed based on an Open Air Interface, OAI, scheme.

8. A method for providing an electronic service guide in a digital video broadcasting system, the method comprising the steps of:
allowing a digital broadcasting apparatus to broadcast a transport stream during a predetermined time period before a prescheduled electronic service guide change time point, when a change in electronic service guide data is requested, wherein the transport stream includes electronic service guide setup data, current electronic service guide data, and next electronic service guide data;
allowing a digital broadcasting reception terminal to receive the transport stream, to analyze the electronic service guide setup data, and to receive and store the current electronic service guide data and the next electronic service guide data according to the analyzed electronic service guide setup data; and
allowing the digital broadcasting reception terminal to provide a digital broadcast service according to the stored next electronic service guide data, after the prescheduled electronic service guide change time point detected from the electronic service guide setup data.

9. The method as claimed in claim 8, wherein the digital broadcasting apparatus broadcasts a transport stream including electronic service guide setup data and current electronic service guide data during another time period, other than the predetermined time period.

10. The method as claimed in claim 8 or 9, wherein the electronic service guide setup data includes current electronic service guide data access information and next electronic service guide data access information when the electronic service guide setup data corresponds to next electronic service guide setup data, and the electronic service guide setup data includes current electronic service guide data access information when the electronic service guide setup data corresponds to current electronic service guide setup data.

11. The method as claimed in claim 8 or 9, wherein the electronic service guide setup data include next electronic service guide data access information when the electronic service guide setup data correspond to next electronic service guide setup data, and the electronic service guide setup data includes current electronic service guide data access information when the electronic service guide setup data corresponds to current electronic service guide setup data.

12. The method as claimed in claim 10 or 11, wherein the next electronic service guide setup data further includes the prescheduled electronic service guide change time point.

13. The method as claimed in one of claims 10 to 12, wherein the digital broadcasting apparatus is constructed based on a Digital Video Broadcasting-Convergence of Broadcasting and Mobile Service, DVB-CBMS, scheme.

14. The method as claimed in claim 10 or 11, wherein the digital broadcasting apparatus is constructed based on an Open Air Interface, OAI, scheme.

15. A method for providing an electronic service guide by a digital broadcasting apparatus in a digital video broadcasting system, the method comprising the steps of:
generating next electronic service guide data according to contents of change in electronic service guide when the change in the electronic service guide is requested; and
broadcasting a transport stream during a predetermined time period before a prescheduled electronic service guide change time point, wherein the transport stream includes electronic service guide setup data, current electronic service guide data, and the next electronic service guide data.

16. The method as claimed in claim 15, wherein the digital broadcasting apparatus broadcasts a transport stream including electronic service guide setup data and current electronic service guide data during another time period, other than the predetermined time period.

17. The method as claimed in claim 15 or 16, wherein the electronic service guide setup data include current electronic service guide data access information and next electronic service guide data access information when the electronic service guide setup data correspond to next electronic service guide setup data, and the electronic service guide setup data include current electronic service guide data access information when the electronic service guide setup data correspond to current electronic service guide setup data.

18. The method as claimed in claim 15 or 16, wherein the electronic service guide setup data includes next electronic service guide data access information when the electronic service guide setup data corresponds to next electronic service guide setup data, and the electronic service guide setup data includes current electronic service guide data access information when the electronic service guide setup data corresponds to current electronic service guide setup data.

19. The method as claimed in claim 17 or 18, wherein the next electronic service guide setup data further includes the prescheduled electronic service guide change time point.

20. A method for providing an electronic service guide by a digital broadcasting reception terminal in a digital video broadcasting system, the method comprising the steps of:
1) receiving a transport stream, analyzing electronic service guide setup data, and receiving and storing current electronic service guide data and next electronic service guide data according to the analyzed electronic service guide setup data, wherein the transport stream includes the electronic service guide setup data, the current electronic service guide data, and the next electronic service guide data, and is broadcasted by a digital broadcasting apparatus; and
2) providing a digital broadcast service according to the stored next electronic service guide data, after a prescheduled electronic service guide change time point detected from the electronic service guide setup data.

21. The method as claimed in claim 20, wherein step 1) comprises the steps of:
receiving and analyzing the electronic service guide setup data included in the transport stream using predetermined IP address and port information;
receiving the current electronic service guide data according to IP address and port information included in the electronic service guide setup data when a set value of next electronic service guide transport data is detected to be "0", wherein the set value is included in the analyzed electronic service guide setup data and represents whether the electronic service guide setup data is related to the current electronic service guide data or the next electronic service guide data;
receiving the next electronic service guide data according to IP address and port information included in the electronic service guide setup data when the set value of the next electronic service guide transport data is detected to be "1"; and
storing the received current electronic service guide data and next electronic service guide data.

22. The method as claimed in claim 20 or 21, wherein the electronic service guide setup data includes current electronic service guide data access information and next electronic service guide data access information when the electronic service guide setup data corresponds to next electronic service guide setup data, and the electronic service guide setup data includes current electronic service guide data access information when the electronic service guide setup data corresponds to current electronic service guide setup data.

23. The method as claimed in claim 20 or 21, wherein the electronic service guide setup data includes next electronic service guide data access information when the electronic service guide setup data corresponds to next electronic service guide setup data, and the electronic service guide setup data includes current electronic service guide data access information when the electronic service guide setup data corresponds to current electronic service guide setup data.

24. The method as claimed in claim 20 or 21, wherein the next electronic service guide setup data further includes the prescheduled electronic service guide change time point.
